# EUROPÄISCHE PATENTSCHRIFT

(11) **EP 4 136 367 B1**
(45) Veröffentlichungstag und Bekanntmachung des Hinweises auf die Patenterteilung: **18.03.2026**
(21) Anmeldenummer: 21727100.6
(22) Anmeldetag: 12.05.2021
(51) Int. Cl.: F16H 48/40, F16H 57/03

(54) **KEGELRADDIFFERENTIAL MIT EINEM GEHÄUSE**
BEVEL GEAR DIFFERENTIAL WITH A HOUSING
DIFFÉRENTIEL À ENGRENAGE CONIQUE AVEC BOÎTIER

(30) Priorität: 18.05.2020 DE 102020113361
(43) Veröffentlichungstag der Anmeldung: 22.02.2023
(73) Patentinhaber: Magna PT B.V. & Co. KGaA, 74199 Untergruppenbach (DE); ElringKlinger AG, 72581 Dettingen (DE)
(72) Erfinder: MANN, Manuel, Hüffenhardt 74928 (DE); RÜHLE, Günter, 74369 Löchgau (DE); LINDENMANN, Gerd, 70825 Korntal (DE); MODL, Patricia, 72534 Hayingen (DE)
(74) Vertreter: Manitz Finsterwald Patent- und Rechtsanwaltspartnerschaft mbB
(86) Internationale Anmeldenummer: PCT/EP2021/062700
(87) Internationale Veröffentlichungsnummer: WO 2021/233762

(56) Entgegenhaltungen:
- WO-A1-2019/202047
- CA-A1- 2 810 870
- JP-A- H11 148 548

## Beschreibung

Die vorliegende Erfindung betrifft ein Kegelraddifferential gemäß dem Oberbegriff des Anspruchs 1, wie es der Art nach im Wesentlichen aus der JP H11 148 548 A bekannt ist.

Auch die WO 2019 / 202 047 A1 beschreibt ein Kegelraddifferential mit einem mehrteiligen aus Metallblech gefertigten Gehäuse.

Weitergehender Stand der Technik ergibt sich ferner aus der CA 2 810 870 A1.

Derartige Differentialgehäuse werden herkömmlicherweise ein- oder zweiteilig aus Sphäroguss hergestellt. Diese Art der Herstellung macht es erforderlich, die Gussteile des Gehäuses einer nachfolgenden spanenden Bearbeitung zu unterziehen. Das das Gehäuse umgebende Antriebszahnrad wird dabei häufig mit dem Differentialgehäuse verschraubt oder verschweißt. Derartige Differentialgehäuse aus Sphäroguss weisen jedoch ein verhältnismäßig hohes Gewicht auf, da solche Gussteile eine gewisse Mindestdicke erfordern.

Ferner ist beispielsweise aus der DE 40 42 173 A1 ein zweiteiliges Differentialgehäuse bekannt, bei dem die beiden Gehäuseteile aus Metallblech hergestellt und über einen Parallelstoß mit dem Antriebszahnrad verschweißt sind. Durch diesen Schweißvorgang wird jedoch eine nicht unerhebliche Wärmemenge in das Gehäuse eingetragen, was geometrische Verzüge zur Folge haben kann. Dementsprechend ist es erforderlich, dass derartige Gehäuse in unerwünschter Weise einer Endbearbeitung unterzogen werden müssen, um Toleranzanforderungen einhalten zu können.

Der Erfindung liegt daher die Aufgabe zugrunde, ein Kegelraddifferential mit einem Differentialgehäuse anzugeben, das ein möglichst geringes Gewicht aufweist, einfach hergestellt werden kann und möglichst weniger Nachbearbeitungsschritte bedarf.

Diese Aufgabe wird mit einem Kegelraddifferential mit den Merkmalen des Anspruchs 1 gelöst, wobei die beiden Gehäuseteile jeweils aus Metallblech gefertigt sind und dass von dem ersten Gehäuseteil zumindest ein Zapfen absteht, der einstückig mit dem ersten Gehäuseteil ausgebildet ist und der sich durch eine entsprechende Öffnung, die in dem zweiten Gehäuseteil ausgebildet ist, hindurch erstreckt, wobei ein über das zweite Gehäuseteil überstehendes freies Ende des Zapfens derart plastisch verformt ist, dass das erste Gehäuseteil fest bzw. unlösbar mit dem zweiten Gehäuseteil verbunden ist. Beispielsweise kann das freie Ende des zumindest einen Zapfens durch Verstemmen und/oder durch Verrollen plastisch verformt werden, wozu eine Rolle oder eine Kugel mit großem Druck über das freie Ende des jeweiligen Zapfens gerollt werden kann, so dass dieses zu fließen beginnt.

Die Drehmomentübertragung von dem Antriebszahnrad auf die Getriebekomponenten des Ausgleichsgetriebes erfolgt bei dem erfindungsgemäßen Kegelraddifferential mittelbar über das Gehäuse, indem dieses seinerseits die Antriebskräfte auf den Differentialbolzen und die darauf drehbar gelagerten Ausgleichskegelräder überträgt.

Da bei bei dem erfindungsgemäßen Kegelraddifferential die Antriebskräfte über das Gehäuse in den Differentialbolzen eingeleitet werden, kann es aufgrund der verhältnismäßig dünnen Blechdicke des ersten Gehäuseteils zu unerwünscht hohen Lochleibungsspannungen entlang der Aufnahmebohrungen kommen, die in dem ersten Gehäuseteil einander diametral gegenüberliegend zur Aufnahme der freien Enden des Differentialbolzens ausgebildet sind.

Um der Entstehung hoher Lochleibungsspannungen entgegenzuwirken, ist es daher erfindungsgemäß vorgesehen, dass das die jeweilige Aufnahmebohrung umgebende Material der Gehäusewand plastisch zu einem zylindrischen Kragen umgeformt ist, der das jeweilige freie Ende des Differentialbolzens umgibt. Die Kraftübertragung zwischen Gehäuse und Differentialbolzen erfolgt also somit nicht rein über die Blechdicke des ersten Gehäuseteils; vielmehr verteilen sich die zu übertragenden Kräfte zusätzlich über die Höhe des Kragens, wodurch der Entstehung unerwünscht hoher Lochleibungsspannungen in der gewünschten Weise entgegengewirkt werden kann.

Alternativ zu der mittelbaren Kraftübertragung von dem Antriebszahnrad auf den Differentialbolzen über das Gehäuse kann die Kraftübertragung von dem Antriebszahnrad erfindungsgemäß auch direkt auf den Differentialbolzen erfolgen. Bei solch einer Ausführungsform ragen die freien Enden des Differentialbolzens aus dem ersten Gehäuseteil heraus, wobei das Antriebszahnrad mit den freien Enden des Differentialbolzens verbunden ist. Das Differentialgehäuse dient dabei lediglich im Wesentlichen als Einhausung der Getriebekomponenten. Aufgrund der Tatsache, dass das Differentialgehäuse bei dieser Ausführungsform im Wesentlichen kräftefrei ist, kann das Gehäuse bei dieser Ausführungsform aus noch dünnerem Metallblech gefertigt werden, was zu einer weiteren Gewichts- und Kosteneinsparung führt. Auch bei dieser Ausführungsform kann der Differentialbolzen zwei einander diametral gegenüberliegende Aufnahmebohrungen des ersten Gehäuseteils durchdringen.

Bei den beiden erfindungsgemäßen Ausführungsformen kann der Differentialbolzen relativ zu dem ersten Gehäuseteil und/oder dem Antriebszahnrad starr angeordnet sein, wobei die Ausgleichskegelräder an dem Differentialbolzen drehbar gelagert sind.

Dadurch, dass die beiden Gehäuseteile aus Metallblech gefertigt sind, können sie kostensparend beispielsweise durch Tiefziehen geformt werden, wobei jedoch auch andere Umformtechniken wie beispielsweise Innenhochdruckumformen zum Einsatz kommen können. Darüber hinaus weist das Gehäuse aufgrund der Tatsache, dass die beiden Gehäuseteile jeweils aus Metallblech gefertigt sind, ein verhältnismäßig geringes Gewicht auf, zumal die Wanddicke des Gehäuses nahezu konstant ausgeführt werden kann, was zu einem weiteren Gewichtsvorteil gegenüber konventionellen Gussteilgehäusen führen kann.

Speziell kann dabei das erste Gehäuseteil derart ausgestaltet sein, dass es zur Aufnahme der einzelnen Getriebekomponenten eines Kegelraddifferentials in der Lage ist, insbesondere zur Aufnahme eines Differentialbolzens, zumindest eines drehbar darauf gelagerten Ausgleichskegelrads und zweier mit dem Ausgleichskegelrad kämmender Achsseitenwellenkegelräder.

Ein weiterer Vorteil des erfindungsgemäßen Gehäuses besteht ferner darin, dass aufgrund der Zweiteiligkeit des Differentialgehäuses keine große radiale Öffnung im Gehäuse für Montagezwecke erforderlich ist. Daher ist das Widerstandsmoment in Rotationsrichtung annähernd konstant, was sich positiv auf die Führung des Antriebszahnrads auswirkt.

Ein wesentlicher Vorteil des erfindungsgemäßen Differentialgehäuses besteht jedoch insbesondere darin, dass dieses weitestgehend verzugsfrei aufgrund der Tatsache gefertigt werden kann, dass die beiden Gehäuseteile nicht etwa verschweißt, sondern über die von dem ersten Gehäuseteil abstehenden Zapfen miteinander verbunden werden. Diese Art der Zapfenverbindung wird wiederum dadurch ermöglicht, dass die beiden Gehäuseteile aus Metallblech gefertigt sind. So lassen sich nämlich die freien Enden der Zapfen, die einstückig mit dem ersten Gehäuseteil ausgebildet sind, aufgrund der Tatsache, dass diese ebenfalls aus Metallblech bestehen, plastisch verformen, um so das erste Gehäuseteil fest mit dem zweiten Gehäuseteil zu verbinden. Beispielsweise kann das freie Ende des zumindest einen Zapfens durch Verstemmen und/oder durch Verrollen plastisch verformt werden, wozu eine Rolle oder eine Kugel mit großem Druck über das freie Ende des jeweiligen Zapfens gerollt wird, so dass dieses zu fließen beginnt. Durch das Verstemmen oder Verrollen kann der Zapfen die Öffnung im zweiten Gehäuseteil durch Fließen des Materials vollständig ausfüllen. Somit entsteht zwischen den beiden Gehäuseteilen eine spielfreie Verbindung.

Zu dem im Zusammenhang mit der Erfindung genannten (zumindest einen) Zapfen des ersten Gehäuseteils ist anzumerken, dass dieser durch jeglichen Fortsatz des ersten Gehäuseteils gebildet sein kann. Beispielsweise kann der Zapfen einen flachen Querschnitt aufweisen. Der Querschnitt des Zapfens kann beispielsweise geradlinig geformt oder gekrümmt sein (insbesondere entlang der Umfangsrichtung des ersten Gehäuseteils betrachtet). Der jeweilige Zapfen kann beispielsweise als zungenartiger Abschnitt von dem restlichen ersten Gehäuseteil abstehen. Der oder die Zapfen kann/können beispielsweise von einem umfänglichen Randabschnitt des ersten Gehäuseteils abstehen.

Was die einstückige Ausbildung des Zapfens mit dem ersten Gehäuseteil betrifft, so kann der Zapfen insbesondere originär integral stoffschlüssig mit dem ersten Gehäuseteil gebildet sein.

Im Folgenden wird nun auf bevorzugte Ausführungsformen des Kegelraddifferentials eingegangen, wobei sich weitere Ausführungsformen auch aus den abhängigen Ansprüchen, der Figurenbeschreibung sowie den Figuren selbst ergeben können.

So kann es gemäß einer Ausführungsform vorgesehen sein, dass sich die Öffnung des zweiten Gehäuseteils, durch die sich der Zapfen des ersten Gehäuseteils hindurch erstreckt, in Richtung des freien Endes des Zapfens zumindest bereichsweise aufweitet, wobei der aufgeweitete Bereich der Öffnung zumindest teilweise mit am freien Ende des Zapfens plastisch verformtem Material verfüllt ist. Vorzugsweise kann es dabei vorgesehen sein, dass das verdrängte Zapfenmaterial die Öffnung komplett ausfüllt. Das zweite Gehäuseteil wird somit gewissermaßen gegen das erste Gehäuseteil gezogen und an diesem spielfrei gesichert.

Wie bereits zuvor erwähnt, kann das erste Gehäuseteil derart ausgestaltet sein, dass es zur Aufnahme der einzelnen Getriebekomponenten eines Kegelraddifferentials in der Lage ist. Gemäß einer Ausführungsform kann hierzu das erste Gehäuseteil eine becherartige Gestalt mit einem Becherboden und einem Becherrand aufweisen, wobei in dem Becherboden eine Öffnung zur Durchführung einer ersten Achswelle ausgebildet ist und von dem Becherrand der zumindest eine Zapfen absteht. Dieser von dem ersten Gehäuseteil gebildete Gehäusebecher stellt somit im Grunde genommen die eigentliche Aufnahme für die Getriebekomponenten des Kegelraddifferentials dar.

Demgegenüber kann das zweite Gehäuseteil wie eine Art Deckel das becherartige erste Gehäuseteil entlang des Becherrands verschließen, ohne dass das zweite Gehäuseteil selbst einen Aufnahmeraum für die Getriebekomponenten bildet. Insbesondere kann das zweite Gehäuseteil einen Deckelabschnitt aufweisen, der eine Öffnung zur Durchführung einer zweite Achswelle ausbildet und der im mit dem ersten Gehäuseteil verbundenen Zustand das erste Gehäuseteil im Wesentlichen verschließt, insbesondere die von dem Becherrand gebildete Öffnung des ersten Gehäuseteils.

Gemäß einer weiteren Ausführungsform kann es vorgesehen sein, dass das erste Gehäuseteil zwischen dem Becherboden und dem Becherrand eine umlaufende Becherwand aufweist, wobei die Becherwand eine plane Fläche, vorzugsweise zwei einander gegenüberliegende plane Flächen, als Anlagefläche für eine plane Rückseite eines jeweiligen Ausgleichskegelrads aufweist. Zwischen der oder den planen Fläche(n) kann die Becherwand die Form einer Zylindermantelfläche aufweisen. Die in Rede stehenden planen Flächen, die als Anlagefläche für eine plane Rückseite eines jeweiligen Ausgleichskegelrads dienen, lassen sich dabei während des Tiefziehens des ersten Gehäuseteils fertigen, so dass hierfür keine zusätzlichen Bearbeitungsschritte anfallen.

Als weitere Ausführungsform kann das erste Gehäuseteil eine kreisförmig umlaufende bzw. eine zylindrische Becherwand aufweisen. In diesem Falle können die für die Anlage der Ausgleichskegelräder erforderlichen Anlageflächen durch zylinderabschnittsförmige Füllstücke realisiert werden. Beispielweise können die Füllstücke zur Anlage an der Becherwand eine zylinderabschnittsförmige Kontur aufweisen, wohingegen sie zur Anlagefläche des Ausgleichskegelrades hin eine plane Fläche - sofern das Ausgleichskegelrad eine plane Rückseite aufweist - oder - sofern das das Ausgleichskegelrad eine kalottenförmige Rückseite aufweist - eine komplementär dazu gewölbte Fläche aufweisen. Somit können Ausgleichskegelräder mit einer planen Anlagefläche oder mit einer kugelkalottenförmigen Anlagefläche zum Einsatz kommen.

Ebenso kann die Becherwand durch zusätzlich eingebrachte Sicken in axialer Richtung versteift werden. Die Sicken können von der Innenseite, vorzugsweise jedoch von der Außenseite, in die Becherwand eingebracht sein. Hierdurch können die Tragfähigkeit des ersten Gehäuseteils weiter erhöht und die Bauteilspannungen entsprechend reduziert werden.

Wie bereits zuvor erwähnt, kann das zweite Gehäuseteil einen Deckelabschnitt aufweisen, der im mit dem ersten Gehäuseteil verbundenen Zustand das erste Gehäuseteil im Wesentlichen verschließt. Gemäß einer weiteren Ausführungsform kann es hierbei vorgesehen sein, dass das zweite Gehäuseteil ferner einen insbesondere gewölbten Flanschabschnitt aufweist, der einstückig mit dem Deckelabschnitt ausgebildet ist und diesen umfangsseitig umgibt.

Gemäß einer besonderen Ausführungsform kann es dabei vorgesehen sein, dass der Flanschabschnitt einen umlaufenden freien Rand aufweist, der sich in einer Ebene erstreckt, die parallel zu und zwischen zwei Ebenen liegt, die von dem Becherboden und dem Becherrand definiert werden. Verschließt also der Deckelabschnitt des zweiten Gehäuseteils das erste Gehäuseteil entlang seines Becherrands, so weist der freie Rand des Flanschabschnitts gegenüber dem Deckelabschnitt einen gewissen Achsversatz auf, so dass der freie Rand des Flanschabschnitts radial außerhalb der Becherwand des ersten Gehäuseteils liegt und diese umfangsseitig umgibt. Der freie Rand des Flanschabschnitts des zweiten Gehäuseteils kann somit als Montagefläche zur Anbringung des Antriebszahnrads des Differentials fungieren. Das Antriebszahnrad kann reibschlüssig, formschlüssig oder durch Verschweißen mit dem Flanschabschnitt verbunden sein.

Als bevorzugte Ausführung des zweiten Gehäuseteils kann der freie Rand des Flanschabschnitts gegenüber dem Deckelabschnitt mit Sicken in radialer Richtung zur Steifigkeitserhöhung ausgeführt sein.

Der von dem ersten Gehäuseteil abstehende zumindest eine Zapfen kann sich bezüglich einer Drehachse des Gehäuses bzw. des Kegelraddifferentials bei einigen Ausführungsformen in axialer Richtung erstrecken, insbesondere in geradliniger Form entlang der Drehachse.

Bei einigen Ausführungsformen kann das erste Gehäuseteil mehrere abstehende Zapfen aufweisen, insbesondere in einer regelmäßigen oder einer unregelmäßigen Verteilung entlang des Umfangs des ersten Gehäuseteils.

Gemäß einer weiteren Ausführungsform kann das das Differentialgehäuse umgebende Antriebszahnrad drehfest mit dem freien Rand des Flanschabschnitts des zweiten Gehäuseteils verbunden sein.

Im Folgenden wird die Erfindung nun rein exemplarisch unter Bezugnahme auf die Zeichnungen beschrieben, in denen:
- Fig. 1: einen Schnitt durch ein Kegelraddifferential gemäß einer ersten Ausführungsform zeigt;
- Fig. 2: eine perspektivische Schnittdarstellung durch das Differentialgehäuse des Kegelraddifferentials gemäß der Ausführungsform der Fig. 1 zeigt.
- Fig. 3: eine perspektivische Darstellung des Differentialgehäuses des Kegelraddifferentials der Fig. 2 zeigt;
- Fig. 4: einen Schnitt durch ein Kegelraddifferential gemäß einer zweiten Ausführungsform zeigt;
- Fig. 5: eine perspektivische Schnittdarstellung des Differentialgehäuses des Kegelraddifferentials gemäß der Ausführungsform der Fig. 4 im Bereich der Zapfenverbindung zeigt;
- Fig. 6: eine perspektivische Darstellung des Differentialgehäuses des Kegelraddifferentials der Fig. 4 zeigt;
- Fig. 7: eine Ansicht einer Ausführungsform eines ersten Gehäuseteils mit planen Flächen und Versteifungssicken zeigt;
- Fig. 8: eine perspektivische Darstellung des ersten Gehäuseteils der Fig. 7 zeigt;
- Fig. 9: eine Ansicht einer Ausführungsform eines ersten zylindrischen Gehäuseteils mit Versteifungssicken zeigt;
- Fig. 10: eine perspektivische Darstellung des ersten Gehäuseteils der Fig. 8 zeigt;
- Fig. 11: in unterschiedlichen Darstellungen ein Füllstück zur Verwendung bei dem ersten Gehäuseteil der Fig. 9 und 10 zeigt;
- Fig. 12: eine Schnittdarstellung einer Ausführungsform eines mit Versteifungssicken versehenen zweiten Gehäuseteils zeigt; und
- Fig. 13: eine perspektivische Darstellung des zweiten Gehäuseteils der Fig. 12 zeigt.

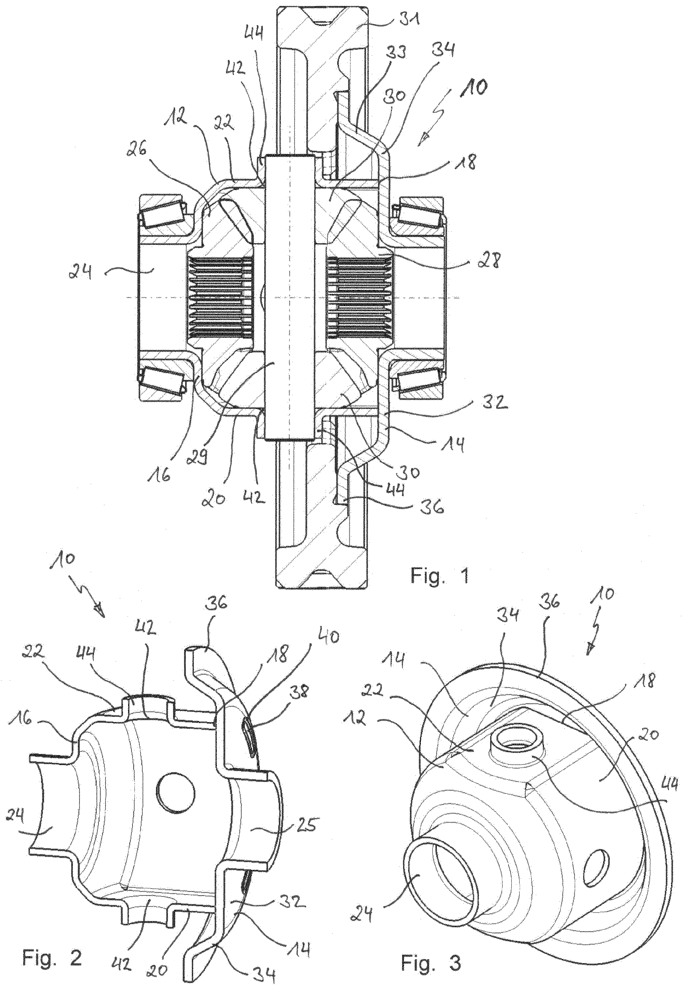

Im Folgenden wird zunächst unter Bezugnahme auf die Fig. 1 bis 3 auf eine erste Ausführungsform eines erfindungsgemäßen Kegelraddifferentials mit dem erfindungsgemäßen Gehäuse 10 eingegangen.

Wie insbesondere der perspektivischen Schnittdarstellung der Fig. 2 entnommen werden kann, die das Differentialgehäuse 10 an sich zeigt, umfasst dieses ein erstes Gehäuseteil 12 und ein zweites Gehäuseteil 14, das mit dem ersten Gehäuseteil 12 in der erfindungsgemäßen Art und Weise über eine nachfolgend genauer beschriebene Zapfenverbindung verbunden ist. Sowohl das erste Gehäuseteil 12 als auch das zweite Gehäuseteil 14 sind aus Metallblech beispielsweise durch Tiefziehen gefertigt, wobei als Umformverfahren auch andere Techniken wie beispielsweise Innenhochdruckumformen zum Einsatz kommen können.

Das erste Gehäuseteil 12 weist dabei eine becherartige Gestalt mit einem Becherboden 16 und einem Becherrand 18 auf, wobei sich in axialer Richtung zwischen dem Becherboden 16 und dem Becherrand 18 eine umlaufende Becherwand 20 des ersten Gehäuseteils 12 erstreckt. Wie insbesondere wiederum der Fig. 2 entnommen werden kann, bildet die Becherwand 20 zwei einander gegenüberliegende plane Flächen 22 aus, welche als Anlagefläche für die plane Rückseite eines jeweiligen Ausgleichskegelrads 30 dienen, wie dies der Schnittdarstellung der Fig. 1 entnommen werden kann. Die in Rede stehenden planen Flächen 22 entlang der Becherwand 20 können dabei im Rahmen des Tiefziehvorgangs des ersten Gehäuseteils 12 ausgebildet werden, so dass zur Ausbildung der in Rede stehenden planen Flächen 22 keine separaten Arbeitsgänge erforderlich sind.

Wie den Fig. 2 und 3 des Weiteren entnommen werden kann, ist in dem Becherboden 16 eine Öffnung 24 zur Durchführung einer ersten Achswelle (nicht dargestellt) ausgebildet, welche über eine Passverzahnungsverbindung mit einem ersten Achsseitenwellenkegelrad 26 verbunden werden kann, das seinerseits mit den beiden Ausgleichskegelrädern 30 kämmt.

Das becherartige erste Gehäuseteil 12 wird an dem Becherrand 18 von dem zweiten Gehäuseteil 14 verschlossen. Genauer weist das zweite Gehäuseteil 14 einen planen Deckelabschnitt 32 auf, der eine Öffnung 25 zur Durchführung einer zweiten Achswelle (nicht dargestellt) ausbildet, welche über eine Passverzahnungsverbindung mit einem zweiten Achsseitenwellenkegelrad 28 verbunden werden kann, die ihrerseits wie das erste Achsseitenwellenkegelrad 26 mit den beiden Ausgleichskegelrädern 30 kämmt.

Wie der Zusammenschau der Fig. 1 und 2 ferner entnommen werden kann, bildet das zweite Gehäuseteil 14 ferner einen einstückig mit dem Deckelabschnitt 32 ausgebildeten Flanschabschnitt 34 aus, an dessen freien Rand 36 bei der Ausführungsform gemäß der Fig. 1 das Antriebszahnrad 31 des Differentials befestigt ist, worauf nachfolgend noch genauer eingegangen wird. Der Flanschabschnitt 34 ist dabei derart in sich gewölbt, dass sich der freie Rand 36 in einer Ebene erstreckt, die parallel zu und zwischen den beiden Ebenen liegt, die von dem Becherboden 16 und dem Becherrand 18 definiert werden, wozu der freie Rand 36 über einen sich verjüngenden Abschnitt 33 des Flanschabschnitts 34 mit dem Deckelabschnitt 32 verbunden ist.

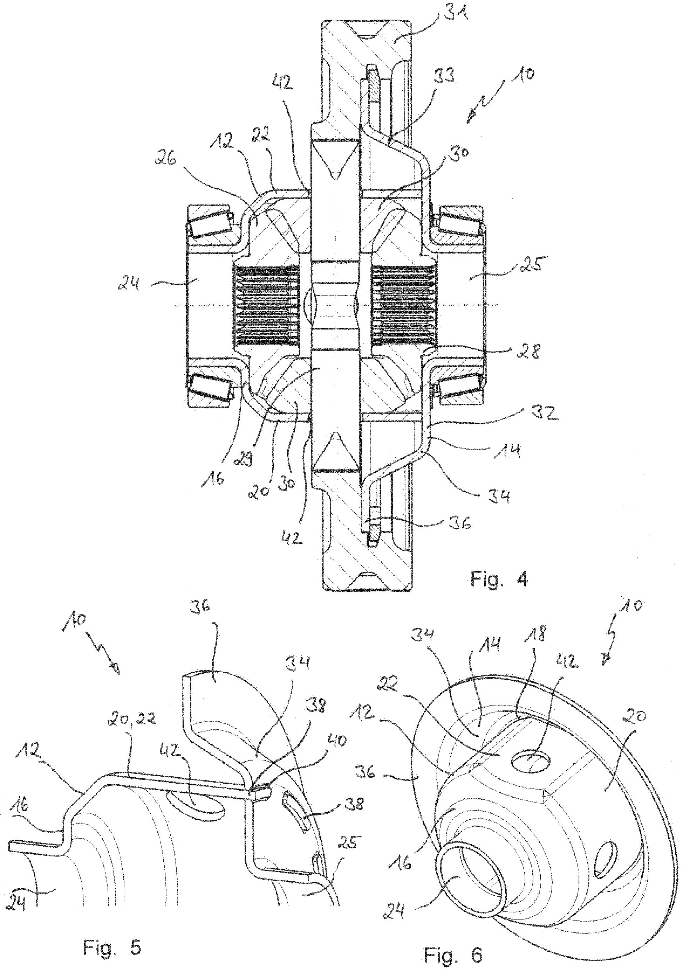

Im Folgenden wird nun insbesondere unter Bezugnahme auf die Fig. 2 und 5 auf die erfindungsgemäße Zapfenverbindung zur Befestigung des ersten Gehäuseteils 12 an dem zweiten Gehäuseteil 14 eingegangen. An dieser Stelle sei angemerkt, dass, obwohl sich die Fig. 5 auf die zweite Ausführungsform des erfindungsgemäßen Differentialgehäuses 10 bezieht, bei dieser Ausführungsform die Zapfenverbindung zwischen den beiden Gehäuseteilen 12, 14 gleich wie bei der ersten Ausführungsform ausgebildet ist, weshalb hier gleichermaßen auf die Fig. 5 Bezug genommen werden kann.

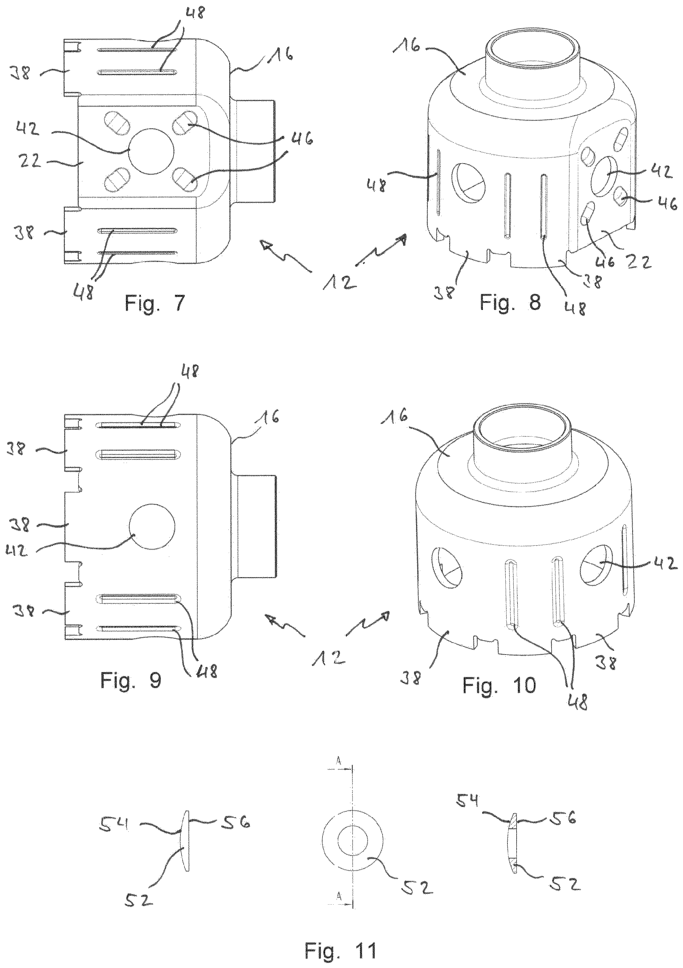

Wie insbesondere der Fig. 5 entnommen werden kann, stehen von dem ersten Gehäuseteil 12 und insbesondere dessen Becherrand 18 mehrere längliche Zapfen 38 ab, und zwar derart, dass sie sich in axialer Richtung in Fortsetzung der Becherwand 20 erstrecken. Aus Stabilitätsgründen sind jedoch in axialer Fortsetzung der zumindest einen planen Flächen 22 an dem Becherrand 18 keine Zapfen 38 vorgesehen, wie dies insbesondere auch der Fig. 8 entnommen werden kann, auf die nachfolgend noch genauer eingegangen wird. Demgegenüber sind in dem zweiten Gehäuseteil 14 und insbesondere in dessen Deckelabschnitt 32 zu den Zapfen 38 korrespondierende bogenförmige Öffnungen 40 ausgebildet, so dass sich ein jeder Zapfen 38 durch eine korrespondierende Öffnung 34 hindurch erstreckt. Die Zapfen 38 weisen dabei im Ausgangszustand eine derartige Länge auf, dass sie über den Deckelabschnitt 32 des zweiten Gehäuseteils 14 einen gewissen Überstand aufweisen.

Nachdem die Zapfen 38 in die in Rede stehenden Öffnungen 40 eingeführt wurden, können somit die freien Enden der Zapfen 38 beziehungsweise die Zapfenüberstände derart plastisch verformt werden, dass das erste Gehäuseteil 12 fest beziehungsweise unlösbar mit dem zweiten Gehäuseteil 14 verbunden ist. Beispielsweise können hierzu die freien Enden der Zapfen 38 durch Verstemmen und/oder durch Verrollen plastisch verformt werden, wozu eine Rolle oder eine Kugel mit hohem Druck über das freie Ende des jeweiligen Zapfens gerollt wird.

Wie insbesondere wiederum der Fig. 5 entnommen werden kann, weiten sich dabei die Öffnungen 40 in dem Deckelabschnitt 32 in Richtung des jeweiligen freien Endes der Zapfen 38 auf, so dass das am freien Ende des jeweiligen Zapfens 38 plastisch verformte Zapfenmaterial in die in Rede stehenden Aufweitungsbereiche der Öffnungen 40 hineinfließen kann. Hierdurch wird das zweite Gehäuseteil 14 in Richtung des ersten Gehäuseteils 12 gezogen, bis der Deckelabschnitt 32 des zweiten Gehäuseteils 14 an dem Becherrand 18 des ersten Gehäuseteils 12 anliegt.

Wie bereits zuvor erwähnt wurde, ist bei der Ausführungsform der Fig. 1 das das Differentialgehäuse 10 umgebende Antriebszahnrad 31 mit dem freien Rand 36 des Flanschabschnitts 34 des zweiten Gehäuseteils 14 verbunden. Beispielsweise kann hierzu das Antriebszahnrad 31 mit dem freien Rand 36 verschweißt oder verschraubt werden. Die Drehmomentübertragung erfolgt somit von dem Antriebszahnrad 31 auf das Differentialgehäuse 10, welches seinerseits das Drehmoment über einen starr mit dem Differentialgehäuse 10 verbundenen Differentialbolzen 29, an dem die beiden Ausgleichskegelräder 30 drehbar gelagert sind, auf das in dem Differentialgehäuse 10 untergebrachte Ausgleichsgetriebe überträgt.

Damit dabei die Ränder der Aufnahmebohrungen 42, durch die sich die freien Enden des Differentialbolzens 29 nach außen erstrecken, keine zu großen Lochleibungsspannungen erfahren, ist dabei das die jeweilige Aufnahmebohrung 42 umgebende Material der Becherwand 20 derart plastisch zu einem Kragen 44 nach außen umgeformt, dass dieser das jeweilige freie Ende des Differentialbolzens 29 umgibt. Somit verteilen sich die von dem Gehäuse 10 auf den Differentialbolzen 29 zu übertragenden Kräfte auf eine größere Fläche, wodurch in der gewünschten Weise die Lochleibungsspannungen klein gehalten werden können.

Im Folgenden wird nun unter Bezugnahme auf die Fig. 4 bis 6 auf die zweite Ausführungsform des erfindungsgemäßen Differentialgehäuses 10 sowie des entsprechenden Kegelraddifferentials eingegangen. Da sich diese zweite Ausführungsform im Wesentlichen lediglich hinsichtlich der Kraftübertragung von dem Antriebszahnrad 31 auf den Differentialbolzen 29 unterscheidet, wird dabei im Wesentlichen auf die gegenüber der Ausführungsform gemäß den Fig. 1 bis 3 unterscheidenden Merkmale eingegangen.

Bei der Ausführungsform gemäß den Fig. 4 bis 6 erfolgt die Kraftübertragung von dem Antriebszahnrad 31 auf den Differentialbolzen 29 nicht oder nicht ausschließlich mittelbar über das Differentialgehäuse 10; vielmehr ist das Antriebszahnrad 31 direkt mit dem Differentialbolzen 29 verbunden, wozu entlang des Innenumfangs des Zahnkranzes beispielsweise zwei Aufnahmenuten zur Aufnahme der freien Enden des Differentialbolzens 29 ausgebildet sein können, in die der Differentialbolzen 29 formschlüssig eingreift, so dass dieser durch die Drehung des Antriebszahnrads 31 mitgenommen werden kann.

Das Differentialgehäuse 10 ist somit im Wesentlichen kräftefrei und dient lediglich als Einhausung oder Umhüllung für die einzelnen Getriebekomponenten des Ausgleichsgetriebes. Dementsprechend besteht bei der Ausführungsform gemäß den Fig. 4 bis 6 kein Risiko erhöhter Lochleibungsspannungen entlang der Aufnahmebohrungen 42, durch die sich der Differentialbolzen 29 aus dem Differentialgehäuse 10 nach außen erstreckt, weshalb der Bohrungsdurchmesser der Aufnahmebohrungen 42 geringfügig größer ausgebildet werden kann als der Durchmesser des Differentialbolzens 29. Da bei dieser Ausführungsform entlang der Aufnahmebohrungen 42 somit keine erhöhten Lochleibungsspannungen auftreten können, ist es bei dieser Ausführungsform nicht erforderlich, das die jeweilige Aufnahmebohrung 42 umgebende Material der Gehäusewand 20 wie bei der Ausführungsform gemäß den Fig. 1 bis 3 zu einem Kragen umzuformen.

Im Folgenden wird nun unter Bezugnahme auf die Fig. 7 bis 13 auf einige spezielle Ausführungsformen des ersten Gehäuseteils 12 sowie des zweiten Gehäuseteils 14 eingegangen.

Die Fig. 7 und 8 zeigen eine Ausführungsform eines ersten Gehäuseteils 12, welches ebenfalls plane Flächen 22 als Anlageflächen für die plane Rückseite von Ausgleichkegelrädern aufweist. Da diese planen Flächen 22 eine geringere Beulsteifigkeit als die gewölbten Bereiche der Becherwand 20 aufweisen, sind bei dieser Ausführungsform in axialer Fortsetzung der zumindest einen planen Fläche 22 an dem Becherrand 18 keine Zapfen 38 vorgesehen, da ansonsten die Gefahr bestünde, dass die planen Flächen beim Verstemmen der Zapfen ausbeulen. Um die planen Flächen 22 zu versteifen, sind daher bei dieser Ausführungsform in die plane Fläche 22 mehrere Versteifungssicken 46 eingebracht, welche sich sternförmig bzw. radial von der Aufnahmebohrung 42 für den Zapfen 38 nach außen erstrecken. Die Versteifungssicken 46 können dabei von der Innenseite in die Becherwand 20 eingebracht sein und bilden somit an der Außenseite der Becherwand 20 eine jeweilige Wölbung aus. Durch die in Rede stehenden Sicken 46 können die Tragfähigkeit des ersten Gehäuseteils 12 und insbesondere die Tragfähigkeit der planen Flächen 22 weiter erhöht und die Bauteilspannungen entsprechend reduziert werden.

Gleichermaßen sind bei der Ausführungsform der Fig. 7 und 8 in die umlaufende Becherwand 20 mehrere längliche und parallel zueinander verlaufende Versteifungssicken 48 eingebracht, die sich vorzugsweise in axialer Richtung erstrecken. Diese Versteifungssicken 48 sind dabei von der Außenseite in die Becherwand 20 eingebracht und bilden somit an der Innenseite der Becherwand 20 eine jeweilige Wölbung aus.

Die in den Fig. 9 und 10 gezeigte Ausführungsform eines ersten Gehäuseteils 12 entspricht im Wesentlichen der der Fig. 7 und 8, wobei hier jedoch die Becherwand 20 entweder eine zylindrische Gestalt aufweist und somit nicht durch etwaige plane Flächen geschwächt ist. Dementsprechend sind bei dieser Ausführungsform entlang des gesamten Becherrand 18 gleichmäßig voneinander beabstandete Zapfen 38 vorgesehen, da hier anders als bei der Ausführungsform der Fig. 7 und 8 die beschriebene Beulproblematik nicht existent ist.

Damit auch bei der Ausführungsform des ersten Gehäuseteils 12 gemäß den Fig. 9 und 10 Ausgleichskegelräder 30 mit planer Rückseite zum Einsatz kommen können, lässt sich hier der Zwischenraum zwischen der zylindrischen Becherwand 20 und der Rückseite des jeweiligen Ausgleichskegelrads 30 mit einem Füllstück 52 bzw. einer Anlaufscheibe überbrücken bzw. ausfüllen, wie es in der Fig. 11 gezeigt ist und welches zur Anlage an der Becherwand 20 eine kugelabschnittsförmige oder zylinderabschnittsförmige Kontur 54 aufweist, wohingegen das Füllstück 52 zur Rückseite des Ausgleichskegelrades 30 hin eine plane Fläche 56 aufweist.

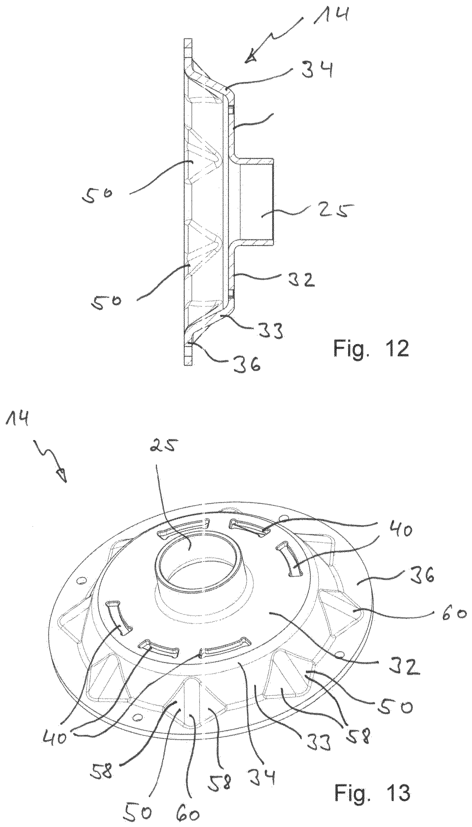

Um auch dem zweiten Gehäuseteil 14 mehr Stabilität zu verleihen, sind bei der Ausführungsform gemäß den Fig. 12 in den Flanschabschnitt 34 mehrere Versteifungssicken 50 eingebracht, die in Umfangsrichtung regelmäßig beanstandet zueinander angeordnet sind. Genauer sind diese Versteifungssicken 50 von der Gehäuseinnenseite aus in sowohl den verjüngenden Abschnitt 32 des Flanschabschnitts 34 als auch in den feien Rand 36 eingebracht. Die Versteifungssicken 50 weisen dabei eine satteldachartige Gestalt mit jeweils zwei Flächen 58 auf, die zusammen einen gemeinsamen Grat 60 ausbilden.

### Bezugszeichenliste

- 10: Differentialgehäuse
- 12: erstes Gehäuseteil
- 14: zweites Gehäuseteil
- 16: Becherboden von 12
- 18: Becherrand von 12
- 20: Becherwand von 12
- 22: plane Fläche an 20
- 24: Öffnung in 16
- 25: Öffnung in 32
- 26: erstes Achsseitenwellenkegelrad
- 28: zweites Achsseitenwellenkegelrad
- 29: Differentialbolzen
- 30: Ausgleichskegelräder
- 31: Antriebszahnrad
- 32: Deckelabschnitt
- 33: sich verjüngender Abschnitt von 34
- 34: Flanschabschnitt
- 36: freier Rand von 34
- 38: Zapfen
- 40: Öffnungen für 38
- 42: Aufnahmebohrungen
- 44: Kragen
- 46: Versteifungssicken
- 48: Versteifungssicken
- 50: Versteifungssicken
- 52: Füllstück
- 54: zylinderabschnittsförmige Kontur 54 von 52
- 56: plane Fläche von 52
- 58: Flächen von 50
- 60: Grat

## Patentansprüche

1. Kegelraddifferential mit einem Gehäuse (10) zur Aufnahme eines Getriebes eines Kegelraddifferentials, mit einem ersten Gehäuseteil (12), das aus einem Metallblech gefertigt ist, und einem zweiten Gehäuseteil (14), das aus einem Metallblech gefertigt ist,
wobei von dem ersten Gehäuseteil (12) zumindest ein Zapfen (38) absteht, der einstückig mit dem ersten Gehäuseteil (12) ausgebildet ist und der sich durch eine entsprechende Öffnung (40), die in dem zweiten Gehäuseteil (14) ausgebildet ist, hindurcherstreckt; und
wobei das Gehäuse (10) von einem Antriebszahnrad (31) umgeben ist und das erste Gehäuseteil (12) einen Differentialbolzen (29) aufnimmt; **dadurch gekennzeichnet, dass**
ein über das zweite Gehäuseteil (14) überstehendes freies Ende des Zapfens (38) derart plastisch verformt ist, dass das erste Gehäuseteil (12) fest mit dem zweiten Gehäuseteil (14) verbunden ist;
wobei entweder
(i) das Antriebszahnrad (31) drehfest mit dem Gehäuse (10) verbunden ist und sich die freien Enden des Differentialbolzens (29) in Aufnahmebohrungen (42) erstrecken, die in einer Gehäusewand (20) des ersten Gehäuseteils (12) ausgebildet sind, wobei das die jeweilige Aufnahmebohrung (42) umgebende Material der Gehäusewand (20) plastisch zu einem Kragen (44) umgeformt ist, der das jeweilige freie Ende des Differentialbolzens (29) umgibt; oder
(ii) die freien Enden des Differentialbolzens (29) aus dem ersten Gehäuseteil (12) herausragen, wobei das Antriebszahnrad (31) mit den freien Enden des Differentialbolzens (29) verbunden ist.

2. Kegelraddifferential nach Anspruch 1,
**dadurch gekennzeichnet,**
**dass** das freie Ende des zumindest einen Zapfens (38) durch Verstemmen und/oder durch Verrollen plastisch verformt ist.

3. Kegelraddifferential nach Anspruch 1 oder 2,
**dadurch gekennzeichnet,**
**dass** sich die Öffnung (40) des zweiten Gehäuseteils (14), durch die sich der Zapfen (38) des ersten Gehäuseteils (12) hindurcherstreckt, in Richtung des freien Endes des Zapfens (38) zumindest bereichsweise aufweitet, wobei der aufgeweitete Bereich der Öffnung (40) zumindest teilweise mit am freien Ende des Zapfens (38) plastisch verformtem Material verfüllt ist.

4. Kegelraddifferential nach einem der vorstehenden Ansprüche,
**dadurch gekennzeichnet,**
**dass** das erste Gehäuseteil (12) derart ausgestaltet ist, dass es zur Aufnahme der Getriebekomponenten eines Kegelraddifferentials in der Lage ist, insbesondere zur Aufnahme eines Differentialbolzens (29), zumindest eines drehbar darauf gelagerten Ausgleichskegelrads (30) und zweier mit dem Ausgleichskegelrad (26) kämmenden Achsseitenwellenkegelrädern (28, 29).

5. Kegelraddifferential nach einem der vorstehenden Ansprüche,
**dadurch gekennzeichnet,**
**dass** das erste Gehäuseteil (12) eine einen Becherboden (16) und einen Becherrand (18) aufweisende becherartige Gestalt zur Aufnahme der Getriebekomponenten eines Kegelraddifferentials aufweist, wobei in dem Becherboden (16) eine Öffnung (24) zur Durchführung einer ersten Achswelle ausgebildet ist und von dem Becherrand (18) der zumindest eine Zapfen (38) absteht.

6. Kegelraddifferential nach Anspruch 5,
**dadurch gekennzeichnet,**
**dass** das erste Gehäuseteil (12) zwischen dem Becherboden (16) und dem Becherrand (18) eine umlaufende Becherwand (20) aufweist, wobei die Becherwand (20) entweder eine zylindrische Gestalt oder eine plane Fläche (22), vorzugsweise zwei einander gegenüberliegende plane Flächen (22), als Anlagefläche für eine plane Rückseite eines jeweiligen Ausgleichskegelrads (30) aufweist.

7. Kegelraddifferential nach Anspruch 6,
**dadurch gekennzeichnet,**
**dass** in die umlaufende Becherwand (20) mehrere längliche Versteifungssicken (48) eingebracht sind, die sich vorzugsweise in axialer Richtung erstrecken; und/oder
**dass** in die zumindest eine plane Fläche (22) mehrere Versteifungssicken (46) eingebracht sind.

8. Kegelraddifferential nach Anspruch 5,
**dadurch gekennzeichnet,**
**dass** das erste Gehäuseteil (12) zwischen dem Becherboden (16) und dem Becherrand (18) eine umlaufende Becherwand (20) aufweist, wobei die Becherwand (20) eine plane Fläche (22), vorzugsweise zwei einander gegenüberliegende plane Flächen (22), als Anlagefläche für eine plane Rückseite eines jeweiligen Ausgleichskegelrads (30) aufweist,
wobei in axialer Fortsetzung der zumindest einen planen Fläche (22) an dem Becherrand (18) keine Zapfen (38) vorgesehen sind.

9. Kegelraddifferential nach einem der vorstehenden Ansprüche,
**dadurch gekennzeichnet,**
**dass** das zweite Gehäuseteil (14) einen Deckelabschnitt (32) aufweist, der eine Öffnung (25) zur Durchführung einer zweite Achswelle ausbildet und der im mit dem ersten Gehäuseteil (12) verbundenen Zustand das erste Gehäuseteil (12) im Wesentlichen verschließt, insbesondere eine Öffnung (25) des ersten Gehäuseteils (12), die von einem Becherrand (18) des ersten Gehäuseteils (12) gebildet wird, das eine becherartige Gestalt zur Aufnahme der Getriebekomponenten des Kegelraddifferentials aufweist.

10. Kegelraddifferential nach Anspruch 9,
**dadurch gekennzeichnet,**
**dass** das zweite Gehäuseteil (12) ferner einen Flanschabschnitt (34) aufweist, der einstückig mit dem Deckelabschnitt (32) ausgebildet ist und diesen umfangsseitig umgibt, wobei es insbesondere vorgesehen ist, dass der Flanschabschnitt (34) einen freien Rand (36) aufweist, der sich in einer Ebene erstreckt, die parallel zu und zwischen von dem Becherboden (16) und dem Becherrand (18) definierten Ebenen liegt.

11. Kegelraddifferential nach Anspruch 10,
**dadurch gekennzeichnet,**
**dass** in den Flanschabschnitt (34) mehrere Versteifungssicken (50) eingebracht sind, die in Umfangsrichtung vorzugsweise regelmäßig beanstandet zueinander angeordnet sind.

12. Kegelraddifferential mit einem Gehäuse (10) nach einem der vorstehenden Ansprüche, wobei das Antriebszahnrad (31) mit dem freien Rand (18) des Flanschabschnitts (34) des zweiten Gehäuseteils (14) verbunden ist.

13. Kegelraddifferential nach Anspruch 1, ferner mit zwei Ausgleichskegelrädern (30), die an dem Differentialbolzen (29) drehbar gelagert sind, und mit zwei Achsseitenwellenkegelrädern (26, 28), die mit den Ausgleichskegelrädern (30) kämmen,
wobei das Kegelraddifferential vorzugsweise Füllstücke (52) aufweist, die zwischen den Ausgleichskegelrädern (30) und einer Innenseite des ersten Gehäuseteils (12) angeordnet sind, um eine formschlüssige Anpassung von Anlageflächen der Ausgleichskegelräder (30) an die Innenseite des ersten Gehäuseteils (12) zu bewirken.

## Claims

1. A bevel gear differential comprising a housing (10) for receiving a gear unit of a bevel gear differential, said housing (10) having a first housing part (12), which is made of a metal sheet, and a second housing part (14) which is made of a metal sheet,
wherein at least one pin (38) projects from the first housing part (12), is formed in one piece with the first housing part (12) and extends through a corresponding opening (40) which is formed in the second housing part (14); and
wherein the housing (10) is surrounded by a drive gear wheel (31) and the first housing part (12) receives a differential bolt (29),
**characterized in that**
a free end of the pin (38) that projects beyond the second housing part (14) is plastically deformed such that the first housing part (12) is fixedly connected to the second housing part (14);
wherein either
(i) the drive gear wheel (31) is rotationally fixedly connected to the housing (10) and the free ends of the differential bolt (29) extend into receiving bores (42) which are formed in a housing wall (20) of the first housing part (12), wherein the material of the housing wall (20) that surrounds the respective receiving bore (42) is plastically reshaped into a collar (44) which surrounds the respective free end of the differential bolt (29); or
(ii) the free ends of the differential bolt (29) project from the first housing part (12), wherein the drive gear wheel (31) is connected to the free ends of the differential bolt (29).

2. A bevel gear differential according to claim 1,
**characterized in that**
the free end of the at least one pin (38) is plastically deformed by staking and/or by rolling.

3. A bevel gear differential according to claim 1 or 2,
**characterized in that**
the opening (40) of the second housing part (14), through which the pin (38) of the first housing part (12) extends, widens at least regionally towards the free end of the pin (38), with the widened region of the opening (40) being at least partly filled with material which is plastically deformed at the free end of the pin (38).

4. A bevel gear differential according to any one of the preceding claims, **characterized in that**
the first housing part (12) is designed such that it is capable of receiving the gear components of a bevel gear differential, in particular of receiving a differential bolt (29), at least one differential bevel gear (30) rotatably supported thereon and two axle side shaft bevel gears (28, 29) meshing with the differential bevel gear (26).

5. A bevel gear differential according to any one of the preceding claims, **characterized in that**
the first housing part (12) has a cup-like shape, which has a cup base (16) and a cup margin (18), for receiving the gear components of a bevel gear differential, with an opening (24) for guiding through a first axle shaft being formed in the cup base (16) and the at least one pin (38) projecting from the cup margin (18).

6. A bevel gear differential according to claim 5,
**characterized in that**
the first housing part (12) has a peripheral cup wall (20) between the cup base (16) and the cup margin (18), with the cup wall (20) having either a cylindrical shape or a planar surface (22), preferably two mutually oppositely disposed planar surfaces (22), as a contact surface for a planar rear side of a respective differential bevel gear (30).

7. A bevel gear differential according to claim 6,
**characterized in that**
a plurality of elongate stiffening beads (48) are formed in the peripheral cup wall (20) and preferably extend in the axial direction; and/or in that a plurality of stiffening beads (46) are formed in the at least one planar surface (22).

8. A bevel gear differential according to claim 5,
**characterized in that**
the first housing part (12) has a peripheral cup wall (20) between the cup base (16) and the cup margin (18), with the cup wall (20) having a planar surface (22), preferably two mutually oppositely disposed planar surfaces (22), as a contact surface for a planar rear side of a respective differential bevel gear (30),
wherein no pins (38) are provided in the axial continuation of the at least one planar surface (22) at the cup margin (18).

9. A bevel gear differential according to any one of the preceding claims, **characterized in that**
the second housing part (14) has a cover section (32) which forms an opening (25) for guiding through a second axle shaft and which, in the state connected to the first housing part (12), substantially closes the first housing part (12), in particular an opening (25) of the first housing part (12), said opening being formed by a cup margin (18) of the first housing part (12) which has a cup-like shape for receiving the gear components of a bevel gear differential.

10. A bevel gear differential according to claim 9,
**characterized in that**
the second housing part (12) further has a flange section (34) which is formed in one piece with the cover section (32) and surrounds the latter at the peripheral side, with provision in particular being made that the flange section (34) has a free margin (36) which extends in a plane that is disposed parallel to and between planes defined by the cup base (16) and the cup margin (18).

11. A bevel gear differential according to claim 10,
**characterized in that**
a plurality of stiffening beads (50) are formed in the flange section (34) and are preferably arranged spaced apart from one another at regular intervals in the peripheral direction.

12. A bevel gear differential comprising a housing (10) according to any one of the preceding claims, wherein the drive gear wheel (31) is connected to the free margin (18) of the flange section (34) of the second housing part (14).

13. A bevel gear differential according to claim 1, further comprising two differential bevel gears (30), which are rotatably supported at the differential bolt (29), and two axle side shaft bevel gears (26, 28) which mesh with the differential bevel gears (30),
wherein the bevel gear differential preferably has filling pieces (52) which are arranged between the differential bevel gears (30) and an inner side of the first housing part (12) to effect a form-fitting adaptation of contact surfaces of the differential bevel gears (30) to the inner side of the first housing part (12).

## Revendications

1. Différentiel à pignons coniques comprenant un boîtier (10) destiné à recevoir un engrenage d'un différentiel à pignons coniques, comprenant une première partie de boîtier (12) fabriquée à partir d'une tôle métallique et une deuxième partie de boîtier (14) fabriquée à partir d'une tôle métallique, dans lequel
au moins un tourillon (38) dépasse de la première partie de boîtier (12), lequel est formé d'un seul tenant avec la première partie de boîtier (12) et s'étend à travers une ouverture correspondante (40) ménagée dans la deuxième partie de boîtier (14) ; et
le boîtier (10) est entouré d'un pignon d'entraînement (31), et la première partie de boîtier (12) reçoit un axe de différentiel (29) ;
**caractérisé en ce que**
une extrémité libre du tourillon (38) dépassant au-delà de la deuxième partie de boîtier (14) est déformée plastiquement de telle sorte que la première partie de boîtier (12) est reliée solidairement à la deuxième partie de boîtier (14) ;
où soit
(i) le pignon d'entraînement (31) est relié solidairement en rotation au boîtier (10), et les extrémités libres de l'axe de différentiel (29) s'étendent dans des alésages de réception (42) ménagés dans une paroi de boîtier (20) de la première partie de boîtier (12), le matériau de la paroi de boîtier (20) entourant l'alésage de réception respectif (42) étant déformé plastiquement pour former un collet (44) qui entoure l'extrémité libre respective de l'axe de différentiel (29) ; soit
(ii) les extrémités libres de l'axe de différentiel (29) font saillie hors de la première partie de boîtier (12), le pignon d'entraînement (31) étant relié aux extrémités libres de l'axe de différentiel (29).

2. Différentiel à pignons coniques selon la revendication 1,
**caractérisé en ce que**
l'extrémité libre dudit au moins un tourillon (38) est déformée plastiquement par matage et/ou par galetage.

3. Différentiel à pignons coniques selon la revendication 1 ou 2,
**caractérisé en ce que**
l'ouverture (40) de la deuxième partie de boîtier (14), à travers laquelle s'étend le tourillon (38) de la première partie de boîtier (12), est évasée au moins localement en direction de l'extrémité libre du tourillon (38), la zone évasée de l'ouverture (40) étant au moins partiellement remplie de matériau déformé plastiquement à l'extrémité libre du tourillon (38).

4. Différentiel à pignons coniques selon l'une des revendications précédentes, **caractérisé en ce que**
la première partie de boîtier (12) est conçue de manière à pouvoir recevoir les composants d'engrenage d'un différentiel à pignons coniques, en particulier de manière à pouvoir recevoir un axe de différentiel (29), au moins un pignon conique de compensation (30) monté de manière rotative sur celui-ci, et deux pignons coniques d'arbre latéral (28, 29) engrenant avec le pignon conique de compensation (26).

5. Différentiel à pignons coniques selon l'une des revendications précédentes, **caractérisé en ce que**
la première partie de boîtier (12) présente une forme en godet avec un fond de godet (16) et un bord de godet (18) pour recevoir les composants d'engrenage d'un différentiel à pignons coniques, une ouverture (24) étant ménagée dans le fond de godet (16) pour le passage d'un premier arbre, et ledit au moins un tourillon (38) faisant saillie du bord de godet (18).

6. Différentiel à pignons coniques selon la revendication 5,
**caractérisé en ce que**
la première partie de boîtier (12) présente, entre le fond de godet (16) et le bord de godet (18), une paroi de godet périphérique (20), la paroi de godet (20) présentant soit une forme cylindrique, soit une surface plane (22), de préférence deux surfaces planes (22) opposées l'une à l'autre, à titre de surface d'appui pour une face arrière plane d'un pignon conique de compensation (30) respectif.

7. Différentiel à pignons coniques selon la revendication 6,
**caractérisé en ce que**
plusieurs moulures de renfort allongées (48) sont intégrées dans la paroi de godet périphérique (20), lesquelles s'étendent de préférence en direction axiale ; et/ou
**en ce que** plusieurs moulures de renfort (46) sont intégrées dans ladite au moins une surface plane (22).

8. Différentiel à pignons coniques selon la revendication 5,
**caractérisé en ce que**
la première partie de boîtier (12) présente une paroi de godet périphérique (20) entre le fond de godet (16) et le bord de godet (18), la paroi de godet (20) présentant une surface plane (22), de préférence deux surfaces planes (22) opposées l'une à l'autre, à titre de surface d'appui pour une face arrière plane d'un pignon conique de compensation (30) respectif,
en prolongement axial de ladite au moins une surface plane (22), le bord de godet (18) est dépourvu de tourillons (38).

9. Différentiel à pignons coniques selon l'une des revendications précédentes, **caractérisé en ce que**
la deuxième partie de boîtier (14) présente une portion couvercle (32) qui forme une ouverture (25) pour le passage d'un deuxième arbre et qui, lorsqu'elle est reliée à la première partie de boîtier (12), ferme sensiblement la première partie de boîtier (12), en particulier une ouverture (25) de la première partie de boîtier (12) qui est formée par un bord de godet (18) de la première partie de boîtier (12) présentant une forme en godet pour recevoir les composants d'engrenage du différentiel à pignons coniques.

10. Différentiel à pignons coniques selon la revendication 9,
**caractérisé en ce que**
la deuxième partie de boîtier (12) présente en outre une portion bride (34) qui est formée d'un seul tenant avec la portion couvercle (32) et entoure celle-ci sur son pourtour, et il est en particulier prévu que la portion bride (34) présente un bord libre (36) qui s'étend dans un plan parallèle aux plans définis par le fond de godet (16) et le bord de godet (18) et situé entre ceux-ci.

11. Différentiel à pignons coniques selon la revendication 10,
**caractérisé en ce que**
plusieurs moulures de renfort (50) sont intégrées dans la portion bride (34), lesquelles sont disposées de préférence à intervalles réguliers les unes par rapport aux autres dans la direction circonférentielle.

12. Différentiel à pignons coniques comprenant un boîtier (10) selon l'une des revendications précédentes,
dans lequel le pignon d'entraînement (31) est relié au bord libre (18) de la portion bride (34) de la deuxième partie de boîtier (14).

13. Différentiel à pignons coniques selon la revendication 1, comprenant en outre deux pignons coniques de compensation (30) montés de manière rotative sur l'axe de différentiel (29), et comprenant deux pignons coniques d'arbre latéral (26, 28) qui engrènent avec les pignons coniques de compensation (30),
le différentiel à pignons coniques comportant de préférence des pièces de remplissage (52) qui sont disposées entre les pignons coniques de compensation (30) et une face intérieure de la première partie de boîtier (12) afin de réaliser un ajustement par complémentarité de forme des surfaces d'appui des pignons coniques de compensation (30) sur la face intérieure de la première partie de boîtier (12).
